# EUROPÄISCHE PATENTSCHRIFT

(11) **EP 2 801 140 B1**
(45) Veröffentlichungstag und Bekanntmachung des Hinweises auf die Patenterteilung: **18.11.2015**
(21) Anmeldenummer: 13709292.0
(22) Anmeldetag: 04.01.2013
(51) Int. Cl.: H02J 3/18, G05F 1/70

(54) **VORRICHTUNG ZUR BEEINFLUSSUNG VON BLINDLEISTUNGSFLÜSSEN**
DEVICE FOR INFLUENCING REACTIVE-POWER FLOWS
DISPOSITIF SERVANT À INFLUER SUR LES FLUX DE PUISSANCE RÉACTIVE

(30) Priorität: 04.01.2012 AT 92012
(43) Veröffentlichungstag der Anmeldung: 12.11.2014
(73) Patentinhaber: Coil Holding GmbH, 4070 Eferding (AT)
(72) Erfinder: GRISENTI, Alexander, A-4623 Gunskirchen (AT); MÜLLEDER, Johann, A-1030 Wien (AT); DOPPLMAIR, Peter, A-4070 Fraham (AT)
(74) Vertreter: Burger, Hannes
(86) Internationale Anmeldenummer: PCT/AT2013/050002
(87) Internationale Veröffentlichungsnummer: WO 2013/102231

(56) Entgegenhaltungen:
- US-A1- 2008 001 581

## Beschreibung

Die Erfindung betrifft eine Vorrichtung zur Beeinflussung von Blindleistungsflüssen in mehrphasigen Wechselstrom- bzw. Drehstromsystemen mit mehreren thyristorgesteuerten oder thyristorgeschalteten Spulensträngen, wobei ein erster Spulenstrang mit einer ersten Phase und einer zweiten Phase des Wechselstromsystems verbunden ist und ein weiterer Spulenstrang mit der ersten Phase und einer weiteren Phase des Wechselstromsystems verbunden ist. Dabei umfasst jeder Spulenstrang eine erste Teilspule und eine zweite Teilspule, welche Teilspulen über zwei erste, netzseitige elektrische Anschlüsse jeweils mit der entsprechenden Phase des Wechselstromsystems verbunden sind und über zwei zweite, thyristorseitige elektrische Anschlüsse mit einer zwischen die Teilspulen geschalteten Thyristoreinheit verbunden sind. Weiters bilden eine erste Teilspule und eine zweite Teilspule jeweils eine baulich eigenständige Spulenbaugruppe und die Längsmittelachsen der bevorzugt jeweils hohlzylindrischen Teilspulen in der Spulenbaugruppe sind im Wesentlichen vertikal zu einer Aufstandsebene, insbesondere dem Erdboden oder einem Gebäudeboden, ausgerichtet.

Vorrichtungen zur Beeinflussung von Blindleistungsflüssen in mehrphasigen, insbesondere dreiphasigen Wechselstromsystem mit mehreren thyristorgesteuerten oder thyristorgeschalteten Spulensträngen zwischen den Phasen des Wechselstromsystems sind grundsätzlich bekannt und bilden beispielsweise eine wesentliche Komponente von sogenannten statischen Blindleistungskompensatoren (static var compensators, SVC) und anderen flexiblen Wechselstromübertragungssystemen (flexible alternating current transmission systems, FACTS).

Auch ist es bekannt, bei solchen Vorrichtungen die Induktivität eines Spulenstrangs auf zwei Teilspulen bzw. Drosseln gleichmäßig aufzuteilen und die Thyristoren zur Erreichung eines verbesserten Kurzschluss- bzw. Erdschlussschutzes zwischen diese beiden Teilspulen zu schalten. In diesem Zusammenhang ist es auch bekannt, die beiden insbesondere baugleichen und damit effizient herzustellenden Teilspulen eines Spulenstrangs in einer baulich eigenständigen Spulenbaugruppe zu kombinieren und die Teilspulen vor allem aus Platzgründen übereinander anzuordnen, wobei Isolator- bzw. Trägerelemente einerseits die untere Teilspule gegenüber der unteren Aufstandsebene bzw. dem Erdboden und andererseits die obere Teilspule gegenüber der unteren Teilspule isolierend abstützen.

Nachteilig an einem solchen Aufbau der Spulenbaugruppen einer Vorrichtung zur Beeinflussung von Blindleistungsflüssen in mehrphasigen Wechselstromsystemen ist vor allem deren relativ geringe Stabilität gegenüber dynamischen Belastungen wie beispielsweise Erdbeben bzw. gegenüber Kräften, die quer zu den Längsmittelachsen der Teilspulen auf diese einwirken. Die Stabilität wird dabei insbesondere durch die relative große Gesamthöhe der übereinander angeordneten Teilspulen und auch durch die Isolator- bzw. Trägerelemente zwischen den Teilspulen einer Spulenbaugruppe negativ beeinflusst. Darüber hinaus ergeben sich weitere Nachteile durch eine Erhöhung der elektrischen Verluste und des Materialaufwands bei der Herstellung aufgrund der Aufteilung der Induktivitäten der Spulenstränge auf jeweils zwei, insbesondere nicht vollständig magnetisch gekoppelte Teilspulen.

Der vorliegenden Erfindung liegt die Aufgabe zugrunde, eine Vorrichtung zur Beeinflussung von Blindleistungsflüssen in mehrphasigen Wechselstromsystemen zu schaffen, welche in Verbindung mit einem möglichst kompakten Aufbau erhöhten Stabilitätsanforderungen insbesondere gegenüber dynamischen Belastungen gerecht wird und welche zugleich reduzierte bzw. minimierte Kosten bei der Herstellung und im Betrieb aufweist.

Die Aufgabe der Erfindung wird durch eine Vorrichtung der eingangs genannten Art gelöst, bei welcher der Induktivitätswert der ersten Teilspule eines Spulenstrangs insbesondere um zumindest 10 % größer dimensioniert ist als der Induktivitätswert der zweiten Teilspule eines Spulenstrangs und bei welcher Vorrichtung in einer Spulenbaugruppe die zweite Teilspule baulich über der ersten Teilspule angeordnet ist und die zweite, obere Teilspule von der ersten, unteren Teilspule getragen wird.

Die Aufgabe der Erfindung wird eigenständig auch durch eine Vorrichtung der eingangs genannten Art gelöst, bei welcher der Induktivitätswert der ersten Teilspule eines Spulenstrangs insbesondere um zumindest 10 % größer dimensioniert ist als der Induktivitätswert der zweiten Teilspule eines Spulenstrangs und bei welcher Vorrichtung in einer Spulenbaugruppe die zweite, innere Teilspule baulich in einem Kernbereich der ersten, äußeren Teilspule angeordnet ist.

Auf diese Weise ist eine Vorrichtung zur Beeinflussung von Blindleistungsflüssen in mehrphasigen Wechselstromsystemen geschaffen, deren jeweils eine erste und eine zweite Teilspule umfassenden Spulenbaugruppen einen niedrigeren Schwerpunkt als die aus dem Stand der Technik bekannten Spulenbaugruppen aufweisen. Aufgrund des niedrigeren Schwerpunktes erhöht sich die Stabilität der Spulenbaugruppen insbesondere gegenüber dynamischen Belastungen wie beispielsweise Erdbeben. Die Absenkung des Schwerpunkts einer Spulenbaugruppe gegenüber der unteren Aufstandsebene wird gemäß der ersten vorteilhaften Ausführungsform durch eine Reduktion der Induktivität und insbesondere durch eine damit ermöglichte bzw. erleichterte Verminderung des Gewichts und/oder der Höhe der zweiten, oberen Teilspule und einer entsprechenden Erhöhung der Induktivität und insbesondere durch eine damit einhergehende Vergrößerung des Gewichts der ersten, unteren Teilspule erreicht.

Gemäß der zweiten vorteilhaften Ausführungsform wird die Absenkung des Schwerpunkts einer Spulenbaugruppe gegenüber der unteren Aufstandsebene in erster Linie durch das Anordnen der zweiten Teilspule der Spulenbaugruppe im Kernbereich der ersten Teilspule erreicht. Damit ist die Gesamthöhe einer Spulenbaugruppe um bis zu 50 % reduzierbar. Auch werden bei einer solchen Ausführung die Isolator- bzw. Trägerelemente zwischen den Teilspulen eingespart, wodurch die Stabilität insbesondere gegenüber Belastungen bei Erdbeben bzw. gegenüber Querkräften auf die Teilspulen weiter erhöht wird. Weiters wird durch die Reduktion der Induktivität und insbesondere durch eine damit ermöglichte bzw. erleichterte Verkleinerung des Außendurchmessers der zweiten, inneren Teilspule ein möglichst optimaler Aufbau der ineinander angeordneten Teilspulen sichergestellt. Besonders vorteilhaft ist auch, dass durch den viel kompakteren Aufbau einer Spulenbaugruppe insbesondere in Bezug auf den Platzbedarf in vertikaler Richtung beispielsweise eine Verringerung von Transportkosten erreichbar ist und eine einfachere Anbringung von Schalldämmungsmaßnahmen wie zum Beispiel eine Einhausung um eine Spulenbaugruppe herum ermöglicht ist.

Grundsätzlich ist eine solche Einhausung erheblich kleiner und damit leichter und günstiger ausbildbar, da die Größe der Spulenbaugruppe reduziert ist. Vor allem aber ermöglicht das ineinander Anordnen der zweiten Teilspule im Kernbereich der ersten Teilspule einen sehr effektiven Einsatz von Umhausungen zur Schallreduktion, welche auf dem Potential der ersten, äußeren Teilspule liegen und damit sehr nahe an der äußeren Teilspule angebracht werden können. Dabei stellen etwa einzuhaltende Isolationsabstände zur zweiten Teilspule kein Problem dar, da die zweite Teilspule im Kernbereich der äußeren, ersten Teilspule liegt.

Unter dem Kernbereich einer hohlzylindrischen Spule werden in diesem Dokument ein Innenbereich der Spule und auf jeder Stirnseite der Spule anschließende Überstandsbereiche verstanden. Der Innenbereich der Spule ist dabei durch die Ebenen einer ersten Stirnseite und einer gegenüberliegenden zweiten Stirnseite der Spule abgegrenzt. Ein Überstandsbereich stellt die zylindrische Fortsetzung des Innenbereichs der Spule dar und dessen Höhe bzw. Länge ist auf ein Drittel der Höhe bzw. Länge des zylindrischen Innenbereichs der Spule begrenzt. Ein sehr großer Teil des gesamten magnetischen Flusses der Spule tritt in diesem Kernbereich auf.

Bei den betrachteten Vorrichtungen zur Beeinflussung von Blindleistungsflüssen in mehrphasigen Wechselstromsystemen ist grundsätzlich der Gesamtwert der Induktivität eines Spulenstranges und damit die Summe der Induktivitäten der ersten und der zweiten Teilspule durch das gewünschte Blindleistungsbeeinflussungsvermögen fixiert. Die Mindestinduktivität der zweiten Teilspule zur Sicherstellung eines ausreichenden Kurzschlussschutzes, insbesondere zur Begrenzung des in einem Schadens- bzw. Störfall auftretenden maximalen Kurzschlussstroms, liegt üblicherweise weit unter dem halben Wert der Gesamtinduktivität beider Teilspulen. Eine unterschiedliche Dimensionierung der ersten und der zweiten Teilspule bezüglich ihrer jeweiligen Induktivität ist daher grundsätzlich möglich.

Grundsätzlich wird die Induktivität einer Teilspule durch eine Anpassung der Windungszahl verändert. Zur Verkleinerung der Induktivität wird die Windungszahl reduziert und dadurch sinkt insbesondere das Gewicht der Teilspule bzw. reduzieren sich deren Abmessungen (Höhe, Außendurchmesser etc.). Zur Vergrößerung der Induktivität wird die Windungszahl erhöht und es treten insbesondere die gegenteiligen Auswirkungen auf. Bei konstant gehaltener Gesamtinduktivität von erster und zweiter Teilspule konnte nun folgender, sehr vorteilhafter Effekt festgestellt werden. Für die größer dimensionierte Teilspule steigen das Gewicht, die Abmessungen, der Materialeinsatz bei der Herstellung etc. weniger stark an als diese Eigenschaften für die entsprechend kleiner dimensionierte Spule sinken. Darüber hinaus ist dieser Effekt umso ausgeprägter, umso größer der Induktivitätsunterschied der beiden Teilspulen ist. Somit ist bei ungleich dimensionierten Teilspulen insbesondere eine kleinere bzw. niedrigere und leichtere Spulenbaugruppe ausbildbar, obwohl die Gesamtinduktivität der Teilspulen der Spulenbaugruppe konstant bleibt.

Neben den eben erwähnten baulichen Vorteilen werden durch die unterschiedliche Dimensionierung der beiden Teilspulen bezüglich ihrer Induktivitäten auch die elektrischen Verluste reduziert, da die Verluste in der zweiten, verkleinerten Teilspule ausgehend von einer Ausführung mit gleich dimensionierten Induktivitätswerten stärker sinken als sie in der ersten, entsprechend vergrößerten Teilspule steigen.

An dieser Stelle sei auch erwähnt, dass die soeben dargelegten baulichen Vorteile und reduzierten elektrischen Verluste grundsätzlich auch dann erreichbar sind, wenn die zweite, kleiner dimensionierte Teilspule unterhalb der ersten, größer dimensionierten Teilspule in einer Spulenbaugruppe angeordnet wäre. Hierbei ist jedoch die Sicherstellung einer ausreichenden Stabilität insbesondere gegenüber Erdbeben nicht bzw. nur mit erheblichem Mehraufwand möglich.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn bei einem ineinander Anordnen der Teilspulen die zweite Teilspule einer Spulenbaugruppe so im Kernbereich der ersten Teilspule angeordnet ist, dass die Ebenen einer oberen Stirnseite und einer unteren Stirnseite der zweiten Teilspule nicht außerhalb eines durch die Ebenen einer oberen Stirnseite und einer unteren Stirnseite der ersten Teilspule gebildeten Innenbereichs der ersten Teilspule angeordnet sind. Auf diese Weise ist eine besonders kompakte und stabile Spulenbaugruppe geschaffen, da die innere Teilspule nicht aus dem Innenbereich der äußeren Teilspule herausragt.

Günstig ist es auch, wenn in einer Spulenbaugruppe eine mittlere Querschnittsebene der ersten Teilspule und eine mittlere Querschnittsebene der zweiten Teilspule in einer Ebene liegen. Auf diese Weise ist eine Spulenbaugruppe geschaffen, bei der die mechanischen Belastungen insbesondere der vorzugsweise vorhandenen, wenigstens einen Haltevorrichtung und die Geräuschentwicklung reduziert sind, da die insbesondere periodisch sich verändernde magnetische Kraftwirkung zwischen den Teilspulen einer Spulenbaugruppe reduziert bzw. minimiert ist.

Bei einer Vorrichtung zur Beeinflussung von Blindleistungsflüssen, bei der im ersten Spulenstrang die erste Teilspule über ihren ersten, netzseitigen elektrischen Anschluss mit der ersten Phase des Wechselstromsystems und die zweite Teilspule über ihren ersten, netzseitigen elektrischen Anschluss mit der zweiten Phase des Wechselstromsystems verbunden sind und im weiteren Spulenstrang die erste Teilspule über ihren ersten, netzseitigen elektrischen Anschluss mit der weiteren Phase des Wechselstromsystems und die zweite Teilspule über ihren ersten, netzseitigen elektrischen Anschluss mit der ersten Phase des Wechselstromsystems verbunden sind, ist es besonders vorteilhaft, wenn zumindest die erste Teilspule aus dem ersten Spulenstrang und die zweite Teilspule aus dem weiteren Spulenstrang eine Spulenbaugruppe bilden und die beiden ersten, mit der ersten Phase des Wechselstromsystems verbundenen elektrischen Anschlüsse der ersten Teilspule und der zweiten Teilspule zusammengefasst sind und einen gemeinsamen elektrischen Phasenanschluss der Spulenbaugruppe bilden. Auf diese Weise ist eine kompaktere Spulenbaugruppe geschaffen, mit der insbesondere der Verkabelungsaufwand reduziert wird, da eine solche Spulenbaugruppe nur mehr drei anstatt vier Anschlüsse aufweist. Es sind nämlich die beiden ersten elektrischen Anschlüsse der beiden Teilspulen zu einem gemeinsamen Phasenanschluss zusammengefasst und dieser bildet zusammen mit den beiden zweiten elektrischen Anschlüssen der beiden Teilspulen zur Verbindung dieser mit einer Thyristoreinheit die drei verbleibenden Anschlusspunkte einer Spulenbaugruppe.

Vorteilhaft ist es auch, wenn bei einem ineinander Anordnen der Teilspulen in einer Spulenbaugruppe, welche Teilspulen aus verschiedenen Spulensträngen stammen, die zweite Teilspule gegensinnig zur ersten Teilspule gewickelt ist. Damit ist eine zumindest teilweise Angleichung der Phasenlagen der Ströme in den Teilspulen einer Spulenbaugruppe erreicht, wodurch Teilspulen mit höheren Induktivitätswerten aufgrund einer verbesserten magnetischen Kopplung und geringeren elektrischen Verlusten infolge von reduzierten Ausgleichsströmen sichergestellt sind. Beispielsweise wird durch diese Maßnahme beim Vorliegen eines Dreiphasen-Drehstromsystems die Phasenverschiebung der Ströme in den Teilspulen einer Spulenbaugruppe von -120 ° auf 60 ° reduziert bzw. halbiert.

Besonders vorteilhaft ist es auch, wenn wenigstens eine Haltevorrichtung zur mechanischen Halterung und Stabilisierung der Teilspulen einer Spulenbaugruppe ausgebildet ist und durch die wenigstens eine Haltevorrichtung eine elektrischen Verbindung zwischen den Teilspulen hergestellt ist, sodass mit Hilfe der wenigstens einen Haltevorrichtung der gemeinsame elektrische Phasenanschluss der Spulenbaugruppe gebildet ist. Wenigstens eine solche Haltevorrichtung ist grundsätzlich vorhanden, um die Teilspulen der Spulenbaugruppe zu haltern und zu stabilisieren. Hierbei können beispielsweise Materialeinsparungen bei der Herstellung und eine Reduktion der Abmessungen der Spulenbaugruppe erreicht werden, wenn mit dieser zumindest einen Haltevorrichtung zugleich auch der gemeinsame elektrische Phasenanschluss der in der Spulenbaugruppe kombinierten Teilspulen realisiert ist.

Besonders vorteilhaft ist es in diesem Zusammenhang auch, wenn bei einem übereinander Anordnen der Teilspulen die wenigstens eine Haltevorrichtung zwischen der ersten, unteren Teilspule und der zweiten, oberen Teilspule einer Spulenbaugruppe angeordnet ist und mit einer oberen Stirnseite der unteren Teilspule und mit einer unteren Stirnseite der oberen Teilspule in einem direkten elektrischen Kontakt steht. Auf diese Weise ist der gemeinsame elektrische Phasenanschluss der Spulenbaugruppe durch die zumindest eine Haltevorrichtung gebildet und bei dem übereinander Anordnen der Teilspulen werden die Isolator- bzw. Trägerelemente zwischen den Teilspulen eingespart bzw. sind solche Elemente nicht nötig. Dies trägt zu einem kompakteren Aufbau der Spulenbaugruppen und insbesondere zu einer erhöhten Stabilität gegenüber dynamischen Belastungen wir beispielsweise Erdbeben bei. Bei einer solchen Ausführungsform sind vorzugsweise zumindest zwei weitere, elektrisch nicht miteinander verbundene Haltevorrichtungen an einer unteren Stirnseite der unteren Teilspule und einer oberen Stirnseite der oberen Teilspule angeordnet, sodass jeweils ein zweiter elektrischer Anschluss zur Verbindung der Spulenbaugruppe mit einer Thyristoreinheit gebildet ist.

Bei einer solchen Ausführungsform der übereinander angeordneten Teilspulen ist es weiters besonders vorteilhaft, dass Schallschutzvorrichtungen, insbesondere Einhausungen die vorzugsweise auf dem Potential der jeweiligen Teilspule liegen, durchgängig an den Außenseiten der beiden Teilspulen anbringbar sind, da kein Isolationsabstand zwischen den Teilspulen nötig ist, weil die wenigstens eine Haltevorrichtung die einander zugewandten Stirnseiten der beiden übereinander angeordneten Teilspulen elektrisch verbindet und somit in diesem Bereich keine Potentialdifferenz vorherrscht. Solche durchgängigen Schallschutzvorrichtungen weisen eine sehr hohe Wirksamkeit auf.

Sehr vorteilhaft ist es auch, wenn bei einem ineinander Anordnen der Teilspulen die wenigstens eine Haltevorrichtung unter der ersten, äußeren Teilspule und der zweiten, inneren Teilspule einer Spulenbaugruppe angeordnet ist und mit unteren Stirnseiten der beiden Teilspulen in einem direkten elektrischen Kontakt steht. Auf diese Weise ist der gemeinsame elektrische Phasenanschluss der Spulenbaugruppe durch die zumindest eine Haltevorrichtung gebildet und es ist eine sehr kompakte Spulenbaugruppe mit einem gegenüber der Aufstandsebene besonders niedrigen Schwerpunkt geschaffen. Bei einer solchen Ausführungsform sind vorzugsweise zumindest zwei weitere, elektrisch nicht miteinander verbundene Haltevorrichtungen an oberen Stirnseiten der beiden Teilspulen angeordnet, sodass jeweils ein zweiter elektrischer Anschluss zur Verbindung der Spulenbaugruppe mit einer Thyristoreinheit gebildet ist.

Günstig ist es auch, wenn bei einem ineinander Anordnen der Teilspulen die zumindest eine Haltevorrichtung, welche den gemeinsamen elektrischen Phasenanschluss bildet, auf mehreren elektrisch isolierenden Trägerelementen ruht, sodass die Spulenbaugruppe gegenüber der unteren Aufstandsebene beabstandet angeordnet ist, und die elektrisch isolierenden Trägerelemente entlang einer ersten Bahn vertikal unter der ersten Teilspule und entlang einer zweiten Bahn vertikal unter der zweiten Teilspule, insbesondere in regelmäßigen Abständen entlang der jeweiligen Bahn angeordnet sind. Auf diese Weise ist eine ideale Abstützung bzw. Übertragung des Gewichts der beiden Teilspulen einer Spulenbaugruppe über die elektrisch isolierenden Trägerelemente auf die untere Aufstandsebene sichergestellt und die zumindest eine Haltevorrichtung kann schwächer bzw. kleiner und damit gewichts- und materialsparender dimensioniert werden.

Vorteilhaft ist es auch, wenn bei einem ineinander Anordnen der Teilspulen die zumindest eine Haltevorrichtung, welche den gemeinsamen elektrischen Phasenanschluss bildet, einen äußeren Abschnitt zur Halterung der ersten Teilspule und einen inneren Abschnitt zur Halterung der zweiten Teilspule der Spulenbaugruppe aufweist und wenn der äußere Abschnitt und der innere Abschnitt der Haltevorrichtung über ein oder mehrere Entkopplungselemente miteinander verbunden sind. Auf diese Weise werden Körperschallübertragungen zwischen den Teilspulen der Spulenbaugruppe, insbesondere von der inneren Teilspule auf die äußere Teilspule, zumindest reduziert und es sind weniger und damit leichtere Schalldämmungsmaßnahmen nötig bzw. einfachere und damit billigere Schalldämmungsmaßnahmen einsetzbar. Auch werden durch die Entkopplungselemente mechanische Spannungen in der zumindest einen Haltevorrichtung aufgrund von Wärmeausdehnung hintangehalten und somit beispielsweise mechanische Beschädigungen einer Spulenbaugruppe verhindert.

Bei einer Vorrichtung zur Beeinflussung von Blindleistungsflüssen, bei der das Wechselstromsystem drei Phasen und die Vorrichtung drei Spulenstränge umfasst, ist es vorteilhaft, wenn die erste Teilspule des ersten Spulenstrangs und die zweite Teilspule eines dritten Spulenstrangs mit der ersten Phase verbunden sind und eine erste Spulenbaugruppe bilden, und die erste Teilspule eines zweiten Spulenstrangs und die zweite Teilspule des ersten Spulenstrangs mit der zweiten Phase verbunden sind und eine zweite Spulenbaugruppe bilden, und die erste Teilspule des dritten Spulenstrangs und die zweite Teilspule des zweiten Spulenstrangs mit einer dritten Phase verbunden sind und eine dritte Spulenbaugruppe bilden. Auf diese Weise ist eine besonders kompakte und stabile TCR-Anordnung für ein dreiphasiges Wechselstromsystem geschaffen, bei dem neben geringeren elektrischen Verlusten im Betrieb auch geringere Kosten bei der Herstellung anfallen.

Günstig ist es auch, wenn die erste Teilspule einer Spulenbaugruppe mehrere hohlzylindrische und in Bezug auf die Längsmittelachse der ersten Teilspule konzentrisch angeordnete Wicklungslagen umfasst, wobei die mehreren Wicklungslagen elektrisch parallel geschaltet und magnetisch gekoppelt sind, und wenn die zweite Teilspule einer Spulenbaugruppe eine einzige hohlzylindrische Wicklungslage umfasst, wobei die zweite Teilspule ebenso konzentrisch zur Längsmittelachse der ersten Teilspule angeordnet ist. Auf diese Weise wird einerseits die Stabilität einer Spulenbaugruppe gegenüber dynamischen Belastungen bzw. Belastungen quer zur Aufstandsebene erhöht, da der Schwerpunkt einer Spulenbaugruppe in vertikaler Richtung möglichst mittig bzw. zentral über der Aufstandsfläche der Spulenbaugruppe auf der unteren Aufstandsebene liegt. Zusätzlich werden durch die konzentrische Anordnung auch die magnetischen Kräfte zwischen den Teilspulen und damit die mechanische Belastung der Spulenbaugruppe und die Geräuschentwicklung reduziert. Andererseits werden in einer Teilspule mit mehreren, elektrisch parallel geschalteten Wicklungslagen die elektrischen Verluste reduziert, da der ohmsche Widerstand in einer solchen Teilspule vermindert ist.

Besonders günstig ist es, wenn die Induktivität der zweiten Teilspule 0,1 % bis 30 %, insbesondere 0,3 % bis 20 %, bevorzugt 0,5 % bis 10 % der Gesamtinduktivität der zweiten Teilspule und der korrespondierenden ersten Teilspule ausmacht. Diese Wertebereiche definieren möglichst optimale Induktivitätsverhältnisse für die beiden Teilspulen, sodass einerseits die zweite Teilspule einen ausreichenden Kurzschlussschutz bietet und andererseits in der zweiten Teilspule möglichst geringe elektrische Verluste auftreten.

Besonders günstig ist es, wenn der Induktivitätswert einer zweiten Teilspule derart hoch gewählt ist, dass in einem Kurzschlussfall durch einen dabei auftretenden Kurzschlussstrom über die zweite Teilspule und die daran angeschlossene Thyristoreinheit der maximal zulässige Strombelastungswert dieser Thyristoreinheit nicht überschritten wird, insbesondere der Kurzschlussstrom einen Wert von 25 kA nicht übersteigt. Eine solche Obergrenze für den maximal auftretenden Kurzschlussstrom schützt einerseits die Thyristoreinheit zuverlässig vor Beschädigung und Zerstörung und andererseits reduziert es den maximalen Induktivitätswert einer zweiten Teilspule so weit, dass diese Teilspule gegenüber der ersten Teilspule relativ klein und leicht ausbildbar ist und relativ geringe zusätzliche elektrische Verluste verursacht.

Zum besseren Verständnis der Erfindung wird diese anhand der nachfolgenden Figuren näher erläutert.

Es zeigen jeweils in stark vereinfachter, schematischer Darstellung:
- Fig. 1: ein Schaltbild einer Vorrichtung zur Kompensation von Blindleistungsflüssen in mehrphasigen Wechselstromsystemen;
- Fig. 2: eine Variante einer Spulenbaugruppe für die Vorrichtung aus Fig. 1 mit übereinander angeordneten Teilspulen in einer ersten perspektivischen Ansicht;
- Fig. 3: die Spulenbaugruppe aus Fig. 2 in einer weiteren perspektivischen Ansicht;
- Fig. 4: die Spulenbaugruppe aus Fig. 2 in einer Schnittdarstellung gemäß der in Fig. 2 angedeuteten Schnittebene IV;
- Fig. 5: eine Variante einer Spulenbaugruppe für die Vorrichtung aus Fig. 1 mit ineinander angeordneten Teilspulen in einer ersten perspektivischen Ansicht;
- Fig. 6: die Spulenbaugruppe aus Fig. 5 in einer weiteren perspektivischen Ansicht;
- Fig. 7: die Spulenbaugruppe aus Fig. 5 in einer Schnittdarstellung gemäß der in Fig. 5 angedeuteten Schnittebene VII.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

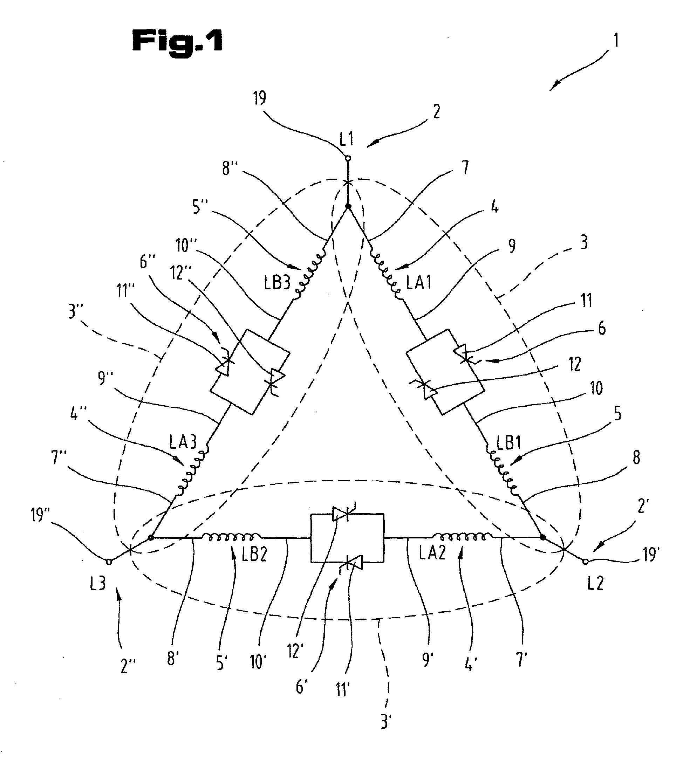

Fig. 1 zeigt ein Schaltbild einer Vorrichtung 1 zur Beeinflussung von Blindleistungsflüssen in einem dreiphasigen Wechselstromsystem, wie es aus dem Stand der Technik bekannt ist. Eine solche Vorrichtung 1 ist nicht auf ein dreiphasiges Wechselstromsystem begrenzt, sondern kann in analoger Weise auch für ein Wechselstromsystem mit mehr Phasen ausgebildet werden.

Im vorliegenden Fall weist das mehrphasige Wechselstromsystem eine erste Phase L1 2, eine zweite Phase L2 2' und eine dritte Phase L3 2" auf. Zwischen den Phasen 2, 2', 2" des Wechselstromsystems sind ein erster Spulenstrang 3, ein zweiter Spulenstrang 3' und ein dritter Spulenstrang 3" der Vorrichtung 1 zur Beeinflussung von Blindleistungsflüssen in einer Dreiecksschaltung angeordnet.

Der erste Spulenstrang 3 umfasst dabei eine erste Teilspule LA1 4, eine zweite Teilspule LB1 5 und eine zwischen die Teilspulen 4, 5 geschaltete Thyristoreinheit 6. Die beiden vorzugsweise als hohlzylindrische Luftspulen ausgeführten Teilspulen 4, 5 des Spulenstranges 3 sind über jeweils einen ersten elektrischen Anschluss 7, 8 mit der entsprechenden Phase 2, 2' des Wechselstromsystems verbunden. Weiters sind die Teilspulen 4, 5 jeweils mit einem zweiten elektrischen Anschluss 9, 10 mit der zwischen die Teilspulen 4, 5 geschalteten Thyristoreinheit 6 verbunden. Eine solche Thyristoreinheit 6 umfasst insbesondere zwei gegengleich geschaltete Thyristoren 11, 12 bzw. allgemein zumindest ein Halbleiterelement mit Steuer- und/oder Schaltfunktionen zur Beeinflussung des Spulenstranges 3. Der zweite Spulenstrang 3' und der dritte Spulenstrang 3" aus Fig. 1 sind grundsätzlich identisch aufgebaut wie der erste Spulenstrang 3 und beinhalten die gleichen Elemente, insbesondere weitere erste Teilspulen LA2 4' bzw. LA3 4" und weitere zweite Teilspulen LB2 5' bzw. LB3 5".

Aus dem Stand der Technik ist es nun grundsätzlich bekannt, eine erste Teilspule 4, 4', 4" und eine zweite Teilspule 5, 5', 5" zu kombinieren und jeweils eine baulich eigenständige Spulenbaugruppe 13, 13', 13" zu bilden. Die beiden Teilspulen 4, 4', 4", 5, 5', 5" sind dabei gleich aufgebaut und weisen somit in etwa die gleichen Induktivitätswerte auf.

Im vorliegenden Fall sind jedoch eine erste Teilspule 4, 4', 4" und eine zweite Teilspule 5, 5', 5" der Spulenstränge 3, 3', 3" bzw. der Spulenbaugruppen 13, 13', 13" bezüglich ihrer Induktivitätswerte unterschiedlich dimensioniert. Insbesondere weist eine erst Teilspule 4, 4', 4" eine um zumindest 10 % größer Induktivität auf als eine zweite Teilspule 5, 5', 5". Als besonders zweckmäßig hat es sich herausgestellt, die zweite Teilspule 5, 5', 5" so zu dimensionieren, dass deren Induktivität 0,1 % bis 30 %, insbesondere 0,3 % bis 20 %, bevorzugt 0,5 % bis 10 % der Summe der Induktivitäten von zweiter Teilspule 5, 5', 5" und korrespondierender erster Teilspule 4, 4', 4" ausmacht.

Grundsätzlich ist der Induktivitätswert der zweiten Teilspule 5, 5', 5" derart hoch gewählt, dass in einem Kurzschlussfall durch einen über die zweite Teilspule 5, 5', 5" und eine daran angeschlossene Thyristoreinheit 6, 6', 6" fließenden Kurzschlussstrom der maximal zulässigen Strombelastungswert der Thyristoreinheit 6, 6', 6" nicht überschritten wird bzw. dass der Kurzschlussstrom einen Wert von 25 KA nicht übersteigt.

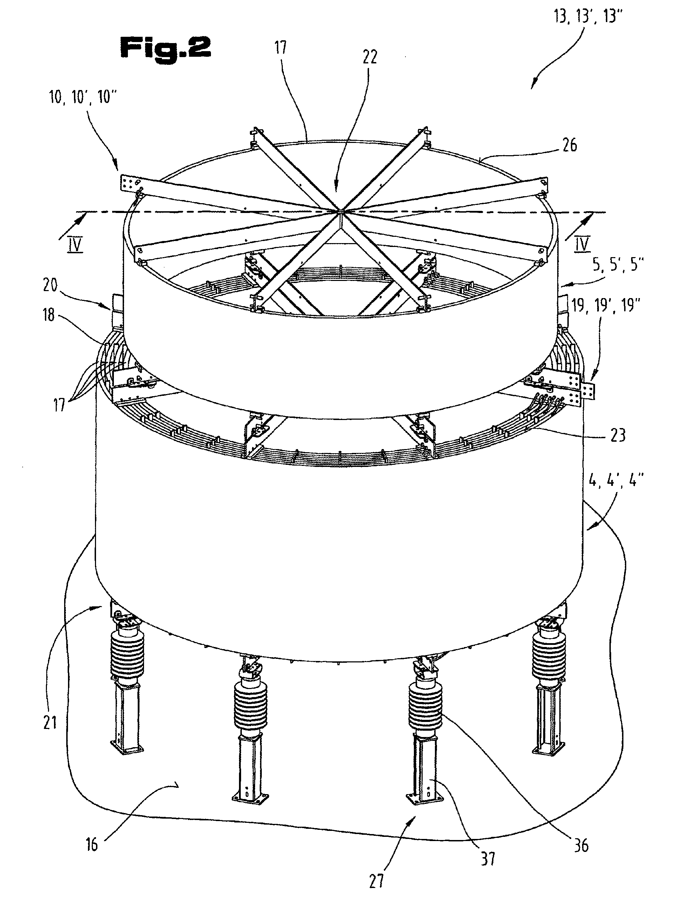

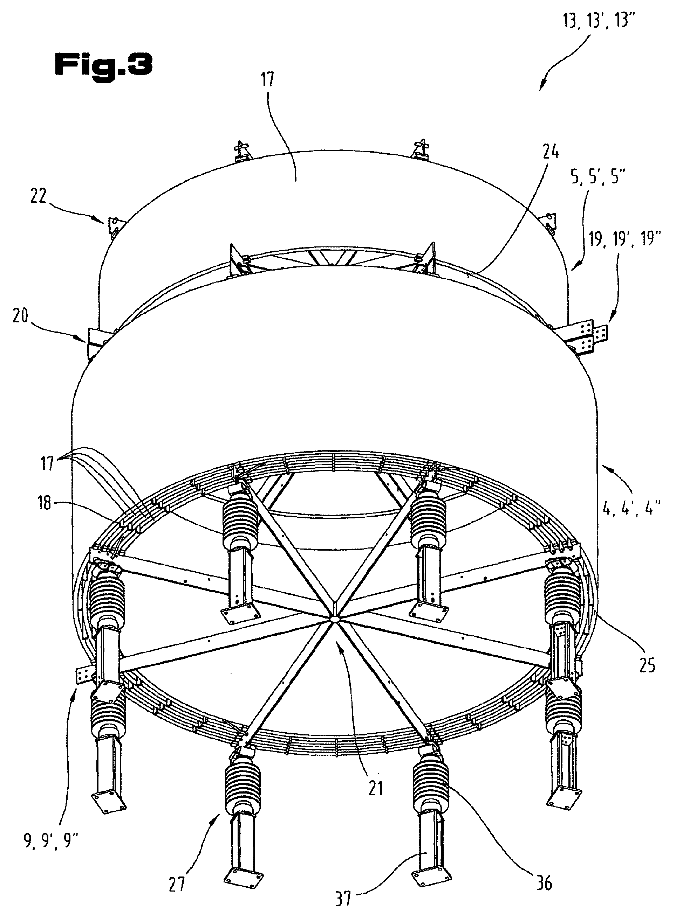

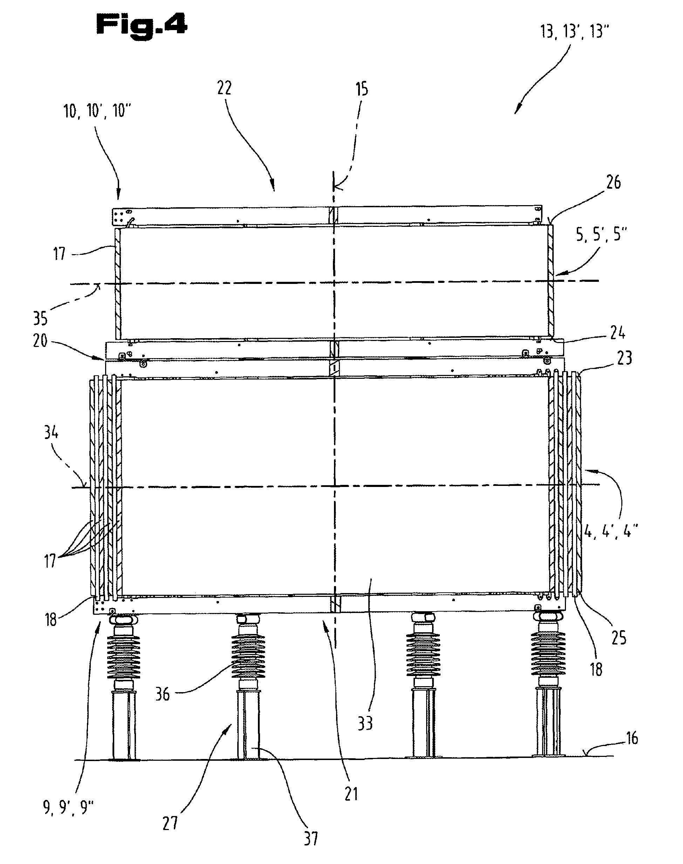

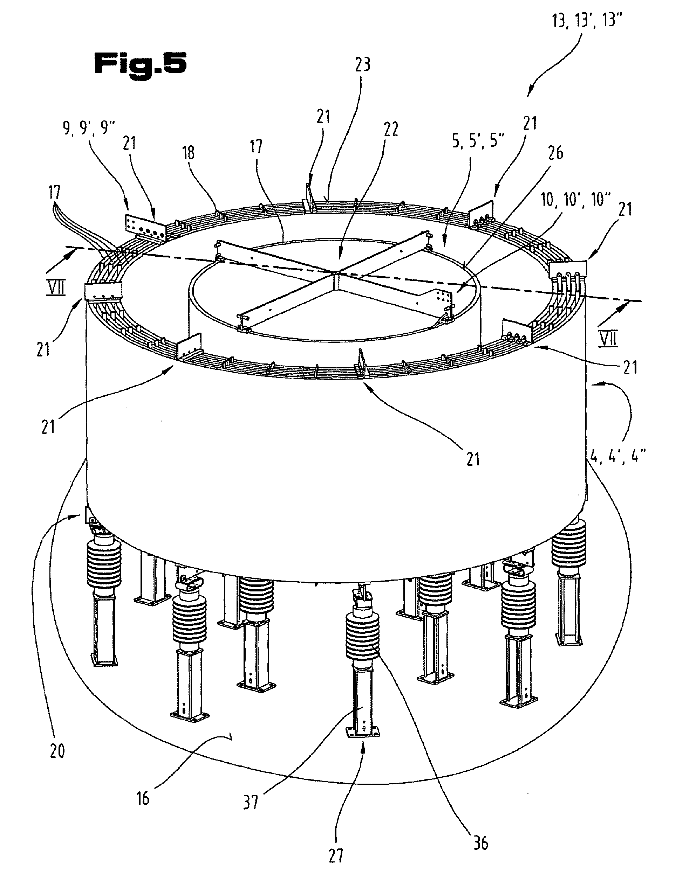

In den Fig. 2-4 sind verschiedene Ansichten einer ersten Ausführungsform einer Spulenbaugruppe 13, 13', 13" dargestellt, bei der die zweite, kleiner dimensionierte Teilspule 5, 5', 5" baulich über der ersten Teilspule 4, 4', 4" angeordnet ist und die zweite Teilspule 5, 5', 5" von der ersten Teilspule 4, 4', 4" getragen wird. Die entsprechenden Ansichten einer zweiten Ausführungsform einer Spulenbaugruppe 13, 13', 13", bei der die zweite, kleiner dimensionierte Teilspule 5, 5', 5" baulich in einem Kernbereich 14 der ersten Teilspule 4, 4', 4" angeordnet ist, sind den Fig. 5-7 zu entnehmen.

Gemeinsam ist allen diesen Spulenbaugruppen 13, 13', 13", dass die Längsmittelachsen 15 der beiden Teilspulen 4, 4', 4", 5, 5', 5" in einer Spulenbaugruppe 13, 13', 13" im Wesentlichen vertikal zu einer Aufstandsebene 16 ausgerichtet sind. Die Aufstandsebene 16 ist insbesondere durch den Erdboden oder einen Gebäudeboden bzw. ein Gebäudefundament realisiert.

In den Ausführungsbeispielen ist die erste, untere bzw. äußere Teilspule 4, 4', 4" aus mehreren hohlzylindrischen und in Bezug auf die Längsmittelachse 15 der Teilspule 4, 4', 4" konzentrisch angeordneten Wicklungslagen 17 aufgebaut, wobei diese Wicklungslagen 17 elektrisch parallel geschaltet und magnetisch gekoppelt sind. Die Wicklungslagen 17 sind mittels Distanzkörper 18 auf Abstand gehalten. Die zweite, obere bzw. innere Teilspule 5, 5', 5" umfasst vorzugsweise nur eine einzige Wicklungslage 17, welche ebenso konzentrisch zur Längsmittelachse 15 angeordnet ist.

Entsprechend einer bevorzugten Ausführungsform, sind jeweils die ersten und zweiten Teilspule 4, 4', 4", 5, 5', 5" zu jeweils einer baulich eigenständigen Spulenbaugruppen 13, 13', 13" zusammengefasst, welche über ihren entsprechenden ersten elektrischen Anschluss 7, 7', 7", 8, 8', 8" mit der gleichen Phase 2, 2', 2" des Wechselstromsystems verbunden sind (vgl. Fig. 1). Im dreiphasigen Wechselstromsystem bilden somit die erste Teilspule 4 des ersten Spulenstranges 3 und die zweite Teilspule 5" des dritten Spulenstrangs 3" die ersten Spulenbaugruppe 13 und ihre mit der ersten Phase 2 des Wechselstromsystems verbundenen ersten elektrischen Anschlüsse 7, 8" sind zusammengeschaltet und bilden einen gemeinsam elektrischen Phasenanschluss 19 der ersten Spulenbaugruppe 13. Auf gleiche Art und Weise bilden die erste Teilspule 4' des zweiten Spulenstrangs 3' und die zweite Teilspule 5 des ersten Spulenstranges 3 eine zweite Spulenbaugruppe 13' und die mit der zweiten Phase 2' des Wechselstromsystems verbundenen ersten elektrischen Anschlüsse 7', 8 sind zu einem gemeinsamen elektrischen Phasenanschluss 19' der zweiten Spulenbaugruppe 13' zusammengeschaltet. Ebenso bilden auch die erste Teilspule 4" des dritten Spulenstrangs 3" und die zweite Teilspule 5' des zweiten Spulenstranges 3" eine dritte Spulenbaugruppe 13" und ihre mit der dritten Phase 2" des Wechselstromsystems verbundenen ersten elektrischen Anschlüsse 7", 8' sind zu einem gemeinsamen elektrischen Phasenanschluss 19" der dritten Spulenbaugruppe 13" zusammengeschaltet.

In den Fig. 2-4 bzw. 5-7 sind Spulenbaugruppen 13, 13', 13" mit ersten Teilspulen 4, 4', 4" und zweiten Teilspulen 5, 5', 5" aus unterschiedlichen Spulensträngen 3, 3', 3" in den unterschiedlichen Ausführungsformen mit einer Spulenanordnung übereinander bzw. einer Spulenanordnung ineinander im Detail dargestellt. Es ist natürlich grundsätzlich auch möglich, entsprechende Spulenbaugruppen 13, 13', 13" mit ersten Teilspulen 4, 4', 4" und zweiten Teilspulen 5, 5', 5" aus denselben Spulensträngen 3, 3', 3" auszubilden und die beiden jeweiligen Teilspulen 4, 4',4", 5, 5', 5" übereinander bzw. ineinander anordnen. Dabei ist es dann aber nicht möglich, einen gemeinsamen elektrischen Phasenanschluss 19, 19', 19" in einer Spulenbaugruppe 13, 13', 13" auszubilden. Ebenso müssen die beiden Teilspulen 4, 4', 4", 5, 5', 5" einer solchen alternativen Spulenbaugruppe 13, 13', 13" voneinander elektrisch isoliert bzw. unter Einhaltung bestimmter Mindestabstände angeordnet werden.

In den gezeigten Ausführungsformen einer Spulenbaugruppe 13, 13', 13" gemäß den Fig. 2-7 ist wenigstens eine Haltevorrichtung 20 zur mechanischen Halterung und Stabilisierung der Teilspulen 4, 4', 4", 5, 5', 5" ausgebildet. Mit dieser wenigstens einen Haltevorrichtung 20 wird eine elektrische Verbindung zwischen den Teilspulen 4, 4', 4", 5, 5',5" der jeweiligen Spulenbaugruppe 13, 13', 13" hergestellt und somit zugleich der entsprechende gemeinsame Phasenanschluss 19, 19', 19" der jeweiligen Spulenbaugruppe 13, 13', 13" ausgebildet. Die zumindest eine Haltevorrichtung 20 der Spulenbaugruppe 13, 13', 13" ist vorzugsweise als Wicklungsstern mit mehreren, radial zur Längsmittelachse 15 der Teilspulen 4, 4', 4", 5, 5', 5" verlaufenden Halteschenkeln ausgebildet.

Bei der in den Fig. 2-4 dargestellten Ausführungsform einer Spulenbaugruppe 13, 13', 13", bei der die Teilspulen 4, 4', 4", 5, 5', 5" übereinander angeordnet sind, ist die wenigstens eine Haltevorrichtung 20 zwischen der ersten, unteren Teilspule 4, 4', 4" und der zweiten, oberen Teilspule 5, 5', 5" angeordnet. Die wenigstens eine Haltevorrichtung 20 ist mit einer oberen Stirnseite 23 der ersten Teilspule 4, 4', 4" und mit einer unteren Stirnseite 24 der zweiten Teilspule 5, 5', 5" elektrisch verbunden und der gemeinsame elektrische Phasenanschluss 19, 19', 19" der Spulenbaugruppe 13, 13', 13" ist durch die wenigstens eine Haltevorrichtung 20 ausgebildet. Die wenigstens eine Haltevorrichtung 20 selbst ist aus zwei übereinander angeordneten und elektrisch verbundenen Wicklungssternen gebildet. Weiters sind bei dieser Ausführungsform zwei weitere, elektrisch nicht miteinander verbundene Haltevorrichtungen 21, 22 an einer unteren Stirnseite 25 der ersten Teilspule 4, 4', 4" und einer oberen Stirnseite 26 der zweiten Teilspule 5, 5', 5" angeordnet, welche Haltevorrichtungen 21, 22 jeweils einen zweiten elektrischen Anschluss 9, 9', 9", 10, 10', 10" zur Verbindung einer Spulenbaugruppe 13, 13', 13" mit einer Thyristoreinheit 6, 6', 6" bilden.

Wie in den Fig. 2-4 ersichtlich, ruht eine Spulenbaugruppe 13, 13', 13" auf mehreren elektrisch isolierenden Trägerelementen 27, welche unterhalb der unteren Haltevorrichtung 21 angeordnet sind und die Spulenbaugruppe 13, 13', 13" gegenüber der unteren Aufstandsebene 16 beabstanden bzw. isolieren. Ein elektrisch isolierendes Trägerelement 27 umfasst einen Isolationskörper 36 und einen darunter angeordneten, vorzugsweise profilartigen Stützkörper 37.

Bei der in den Fig. 5-7 dargestellten Ausführungsform, bei der die Teilspulen 4, 4', 4", 5, 5', 5" ineinander angeordnet sind, ist die wenigstens eine Haltevorrichtung 20 unter der ersten Teilspule 4, 4', 4" und der zweiten Teilspule 5, 5', 5" einer Spulenbaugruppe 13, 13', 13" angeordnet und die unteren Stirnseiten 24, 25 der beiden Teilspulen 4, 4', 4", 5, 5', 5" stehen in einem direkten elektrischen Kontakt mit der wenigstens einen Haltevorrichtung 20. Dadurch ist der gemeinsame elektrische Phasenanschluss 19, 19', 19" der Spulenbaugruppe 13, 13', 13" gebildet. Zwei weitere, elektrisch nicht miteinander verbundene Haltevornchtungen 21, 22 sind an den oberen Stirnseiten 23, 26 der beiden Teilspulen 4, 4', 4", 5, 5', 5" angeordnet, welche Haltevorrichtungen 21, 22 jeweils einen zweiten elektrischen Anschluss 9, 9', 9", 10, 10', 10" zur Verbindung der Spulenbaugruppe 13, 13', 13" mit einer Thyristoreinheit 6, 6', 6" ausbilden.

Wie in den Fig. 5-7 ersichtlich, kann eine Haltevorrichtung 21 auch aus mehreren einzelnen Haltestegen aufgebaut sein.

Die an der jeweiligen Stirnseite 23, 25 der ersten Teilspule 4, 4', 4" angeordneten Haltevorrichtungen 20, 21 sind so ausgeführt, dass durch sie die einzelnen Wicklungslagen 17 der ersten Teilspule 4, 4', 4" elektrisch parallel geschaltet sind.

Bei einer Spulenbaugruppe 13, 13', 13" mit ineinander angeordneten Teilspulen 4, 4', 4", 5, 5', 5" ist es zweckmäßig, mehrere elektrisch isolierende Trägerelemente 27 unterhalb der zumindest einen Haltevorrichtung 20, welche die beiden Teilspulen 4, 4', 4", 5, 5', 5" haltert bzw. trägt, anzuordnen. In der in den Fig. 5-7 dargestellten Ausführung sind die elektrisch isolierenden Trägerelemente 27 entlang einer ersten, kreisförmigen Bahn vertikal unter der ersten Teilspule 4, 4', 4" und entlang einer zweiten, kreisförmigen Bahn vertikal unter der zweiten Teilspule 5, 5', 5" in regelmäßigen Abständen entlang der jeweiligen Bahn angebracht. Die erste Gruppe an elektrisch isolierenden Trägerelementen 27 ist somit direkt unterhalb der ersten, äußeren Teilspule 4, 4', 4" der Spulenbaugruppe 13, 13', 13" angeordnet und die zweite Gruppe der elektrisch isolierenden Trägerelemente 27 ist direkt unter der zweiten, inneren Teilspule 5, 5', 5" der Spulenbaugruppe 13, 13', 13" angeordnet. Alle elektrisch isolierenden Trägerelemente 27 zusammen sorgen dafür, dass die Spulenbaugruppe 13, 13', 13" gegenüber der unteren Aufstandsebene 16, welche beispielsweise durch den Erdboden oder einen Hallenboden gebildet ist, beabstandet und elektrisch isolierend angeordnet ist.

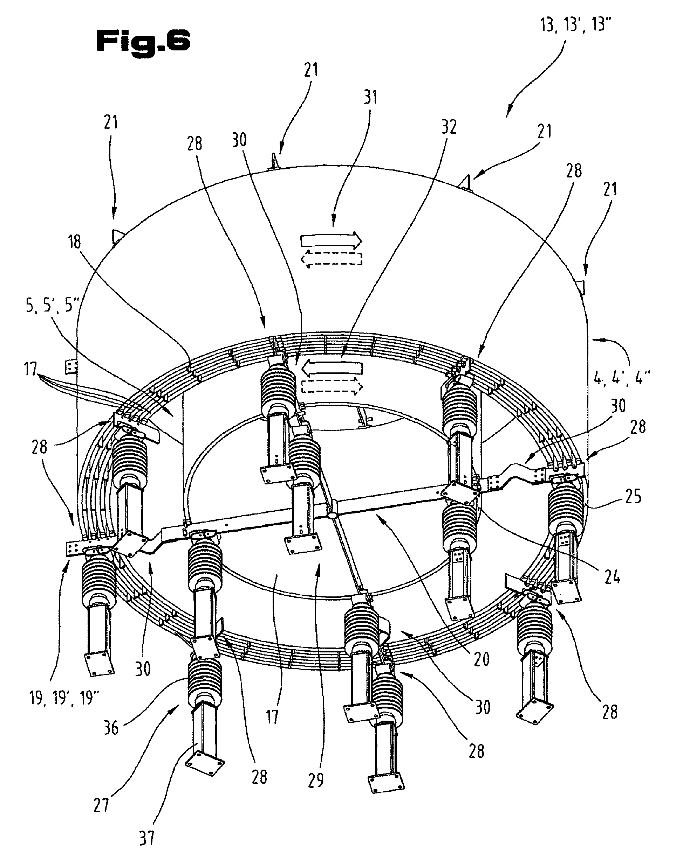

Wie am besten in der Fig. 6 ersichtlich, ist die zumindest eine Haltevorrichtung 20, welche den gemeinsamen elektrischen Phasenanschluss 19, 19', 19" einer Spulenbaugruppe 13, 13', 13" bildet, in einen äußeren Abschnitt 28, welcher die erste, äußere Teilspule 4, 4', 4" trägt und in einen inneren Abschnitt 29, welcher die zweite, innere Teilspule 5, 5', 5" trägt, unterteilt. Im vorliegenden Fall ist der äußere Abschnitt 28 der Haltevorrichtung 20 aus mehreren, einzelnen und radial zur Längsmittelachse 15 der Spulenbaugruppe 13, 13', 13" verlaufenden Haltestegen gebildet. Zumindest ein Teil der Haltestege des äußeren Abschnittes 28 der Haltevorrichtung 20 ist über Entkopplungselemente 30 mit dem inneren Abschnitt 29 der Haltevorrichtung 20 verbunden, wobei der innere Abschnitt 29 der Haltevorrichtung 20 durch einen Wicklungsstern mit mehreren, radial zur Längsmittelachse 15 verlaufenden Halteschenkeln gebildet ist.

Bei den Entkopplungselementen 30 sind verschiedene Ausführungsformen möglich. Einerseits können diese Entkopplungselemente beispielsweise als stabile Winkelelemente ausgeführt sein, welche in radialer Richtung eine gewisse Elastizität aufweisen. Zugleich übertragen diese Winkelelemente einen Teil des Gewichts der zweiten, inneren Teilspule 5, 5', 5", welches Gewicht auf dem inneren Abschnitt 29 des Halteelements 20 lastet, an den äußeren Abschnitt 28 des Halteelements 20 und über die elektrisch isolierenden Trägerelemente 27 des äußeren Abschnitt 28 des Halteelementes 20 wird das Gewicht weiter auf die Aufstandsebene 16 geleitet. Damit kann zumindest ein Teil der elektrisch isolierenden Trägerelemente 27 des inneren Abschnitts 29 der Haltevorrichtung 20 eingespart werden bzw. kann auf solche elektrisch isolierenden Trägerelemente 27 in Bereich des inneren Abschnitts 29 sogar gänzlich verzichtet werden.

Zur Erreichung einer möglichst umfassenden mechanischen Entkopplung des äußeren Abschnitts 28 und des inneren Abschnitts 29 der Haltevorrichtung 20, insbesondere zur Vermeidung von Körperschall- und Schwingungsübertragungen bzw. von mechanischen Spannungen in der Haltevorrichtung 20, kann es auch vorgesehen sein, die Entkopplungselemente 30 beispielsweise als flexible Litzenkabel auszubilden. In diesem Fall sind elektrisch isolierende Trägerelemente 27 auch im Bereich des inneren Abschnitts 29 der Haltevorrichtung 20 zwingend erforderlich, um das Gewicht der zweiten, inneren Teilspule 5, 5', 5" aufzunehmen und an die untere Aufstandsebene 16 zu übertragen.

Bei einem ineinander Anordnen der ersten Teilspule 4, 4', 4" und der zweiten Teilspule 5, 5', 5" ist es besonders zweckmäßig, die zweite Teilspule 5, 5', 5" gegensinnig zu ersten Teilspule 4, 4', 4" zu wickeln. Wie in der Fig. 6 angedeutet, wird also in einem solchen Fall bei der die erste, äußere Teilspule 4, 4', 4" mit einem ersten Wicklungssinn 31 gewickelt und die zweite, innere 5, 5', 5" mit einem dazu entgegengesetzten, zweiten Wicklungssinn 32 gewickelt.

Wie in den Fig. 5-7 ersichtlich, ist bei der dargestellten Ausführungsform von ineinander angeordneten Teilspulen 4, 4', 4", 5, 5', 5" die zweite, innere Teilspule 5, 5', 5" so im Kembereich 14 der ersten, äußeren Teilspule 4, 4', 4" angeordnet, dass die durch die obere Stirnseite 26 und die untere Stirnseite 24 festgelegten Ebenen der zweiten Teilspule 5, 5', 5" nicht außerhalb eines Innenbereichs 33 der ersten Teilspule 4, 4', 4" angeordnet sind. Dabei ist der Innenbereich 33 durch die Ebenen einer oberen Stirnseite 23 und einer unteren Stirnseite 25 der ersten, äußeren Teilspule 4, 4', 4" festgelegt.

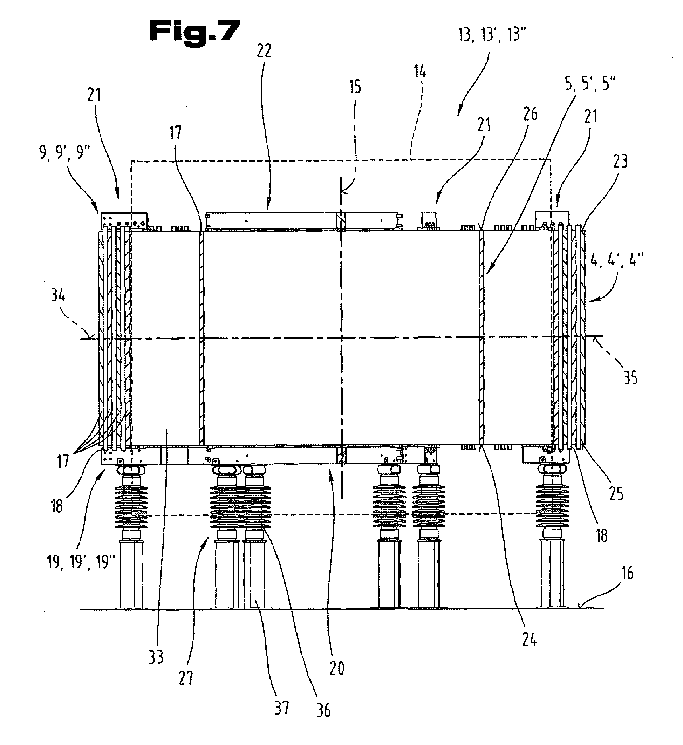

In der dargestellten Ausführungsform der ineinander angeordneten Teilspulen 4, 4', 4", 5, 5', 5" weisen die beiden Teilspulen 4, 4', 4", 5, 5', 5" insbesondere die gleiche axiale Höhe auf und ihre oberen Stirnseiten 23 bzw. 26 und ihre unteren Stirnseiten 25 bzw. 24 liegen somit jeweils in einer Ebene. Wie bereits früher dargelegt und in Fig. 7 grafisch veranschaulicht, erstreckt sich der Kernbereich 14 einer ersten Teilspule 4, 4', 4" jeweils um ein Drittel der Höhe bzw. Länge des Innenbereichs 33 der ersten Teilspule 4, 4', 4" an beiden Stirnseiten 23, 25 der ersten Teilspule 4, 4', 4" aus dem Innenbereich 33 heraus. Das eben Gesagte gilt in analoger Weise auch für einen nicht zeichnerisch dargestellten Innenbereich bzw. Kernbereich der zweiten Teilspule 5, 5', 5".

Wie am besten auch aus Fig. 7 ersichtlich, ist es bei einer Ausführungsform von ineinander angeordneten Teilspulen 4, 4', 4", 5, 5', 5" besonders zweckmäßig, wenn in einer Spulenbaugruppe 13, 13', 13" eine mittlere Querschnittsebene 34 der ersten Teilspulen 4, 4', 4" mit eine mittleren Querschnittsebene 35 der zweiten Teilspule 5, 5', 5" zusammenfallen und somit eine gemeinsame Ebene gebildet ist bzw. die erste Teilspule 4, 4', 4" und die zweite Teilspule 5, 5', 5" bezüglich ihrer vertikalen Ausrichtungen zueinander zentriert positioniert sind.

Bei den Spulenbaugruppen 13, 13', 13" gemäß den Ausführungsbeispielen in den Fig. 2-7 können besonders effektive und zugleich leichte bzw. kostengünstige Schalldämmungsmaßnahmen eingesetzt werden. Schallschutzvorrichtungen wie beispielsweise Umhausungen oder Ummantelungen einer Spulenbaugruppe 13, 13', 13" (nicht in den Fig. 2-7 gezeigt) sind nämlich sehr nahe und vor allem unterbrechungsfrei rund um die erste, untere 4, 4', 4" und zweite obere Teilspule 5, 5', 5" bzw. rund um die erste, äußere Teilspule 4, 4', 4" und damit zugleich auch um die zweite, innere Teilspule 5, 5', 5" anbringbar. Eine solche Schallschutzvorrichtung ist dabei insbesondere an den Haltelementen 20-22 und/oder an den Teilspulen 4, 4', 4", 5, 5', 5" einer Spulenbaugruppe 13, 13', 13" befestigt.

Der Ordnung halber sei abschließend darauf hingewiesen, dass zum besseren Verständnis des Aufbaus der Vorrichtung zur Beeinflussung von Blindleistungsflüssen diese bzw. deren Bestandteile teilweise unmaßstäblich und/oder vergrößert und/oder verkleinert dargestellt wurden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Vorrichtung zur Beeinflussung von Blindleistungsflüssen, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1; 2-4; 5-7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Vorrichtung | 27 | Trägerelement |
| 2 | Erste Phase | 28 | Äußerer Abschnitt |
| 2' | Zweite Phase | 29 | Innerer Abschnitt |
| 2" | Dritte Phase | 30 | Entkopplungselement |
| 3 | Erster Spulenstrang | 31 | Wicklungssinn |
| | | | |
| 3' | Zweiter Spulenstrang | 32 | Wicklungssinn |
| 3" | Dritter Spulenstrang | 33 | Innenbereich |
| 4,4',4" | Erste Teilspule | 34 | Mittlere Querschnittsebene |
| 5,5',5" | Zweite Teilspule | 35 | Mittlere Querschnittsebene |
| 6,6',6" | Thyristoreinheit | 36 | Isolationskörper |
| | | | |
| 7,7',7" | Erster elektrischer Anschluss | 37 | Stützkörper |
| 8,8',8" | Erster elektrischer Anschluss | | |
| 9,9',9" | Zweiter elektrischer Anschluss | | |
| 10,10',10" | Zweiter elektrischer Anschluss | | |
| 11,11',11" | Thyristor | | |
| | | | |
| 12,12',12" | Thyristor | | |
| 13,13',13" | Spulenbaugruppe | | |
| 14 | Kernbereich | | |
| 15 | Längsmittelachse | | |
| 16 | Aufstandsebene | | |
| | | | |
| 17 | Wicklungslage | | |
| 18 | Distanzkörper | | |
| 19,19',19" | gemeinsamer elektrischer Phasenanschluss | | |
| 20 | Haltevorrichtung | | |
| 21 | Haltevorrichtung | | |
| | | | |
| 22 | Haltevorrichtung | | |
| 23 | Obere Stirnseite | | |
| 24 | Untere Stirnseite | | |
| 25 | Untere Stirnseite | | |
| 26 | Obere Stirnseite | | |

## Patentansprüche

1. Vorrichtung (1) zur Beeinflussung von Blindleistungsflüssen in mehrphasigen Wechselstromsystemen mit mehreren thyristorgesteuerten oder thyristorgeschalteten Spulensträngen (3, 3"), wobei ein erster Spulenstrang (3) mit einer ersten Phase (2) und einer zweiten Phase (2') des Wechselstromsystems verbunden ist und ein weiterer Spulenstrang (3") mit der ersten Phase (2) und einer weiteren Phase (2") des Wechselstromsystems verbunden ist und wobei jeder Spulenstrang (3, 3") eine erste Teilspule (4, 4") und eine zweite Teilspule (5, 5") umfasst, welche Teilspulen (4, 4", 5, 5") über erste elektrische Anschlüsse (7, 7", 8, 8") jeweils mit der entsprechenden Phase (2, 2', 2") des Wechselstromsystems verbunden sind und über zweite elektrische Anschlüsse (9, 9", 10, 10") mit einer zwischen die Teilspulen (4, 4", 5, 5") geschalteten Thyristoreinheit (6, 6") verbunden sind und wobei eine erste Teilspule (4, 4") und eine zweite Teilspule (5, 5") jeweils eine baulich eigenständige Spulenbaugruppe (13) bilden und die Längsmittelachsen (15) der Teilspulen (4, 4", 5, 5") in der Spulenbaugruppe (13) im Wesentlichen vertikal zu einer Aufstandsebene (16) ausgerichtet sind, **dadurch gekennzeichnet, dass** der Induktivitätswert der ersten Teilspule (4, 4") insbesondere um zumindest 10 % größer dimensioniert ist als der Induktivitätswert der zweiten Teilspule (5, 5") und dass in einer Spulenbaugruppe (13) die zweite Teilspule (5, 5") baulich über der ersten Teilspule (4, 4") angeordnet ist und die zweite Teilspule (5, 5") von der ersten Teilspule (4, 4") getragen wird.

2. Vorrichtung (1) zur Beeinflussung von Blindleistungsflüssen in mehrphasigen Wechselstromsystemen mit mehreren thyristorgesteuerten oder thyristorgeschalteten Spulensträngen (3, 3"), wobei ein erster Spulenstrang (3) mit einer ersten Phase (2) und einer zweiten Phase (2') des Wechselstromsystems verbunden ist und ein weiterer Spulenstrang (3") mit der ersten Phase (2) und einer weiteren Phase (2") des Wechselstromsystems verbunden ist und wobei jeder Spulenstrang (3, 3") eine erste Teilspule (4, 4") und eine zweite Teilspule (5, 5") umfasst, welche Teilspulen (4, 4", 5, 5") über erste elektrische Anschlüsse (7, 7", 8, 8") jeweils mit der entsprechenden Phase (2, 2', 2") des Wechselstromsystems verbunden sind und über zweite elektrische Anschlüsse (9, 9", 10, 10") mit einer zwischen die Teilspulen (4, 4", 5, 5") geschalteten Thyristoreinheit (6, 6") verbunden sind und wobei eine erste Teilspule (4, 4") und eine zweite Teilspule (5, 5") jeweils eine baulich eigenständige Spulenbaugruppe (13) bilden und die Längsmittelachsen (15) der Teilspulen (4, 4", 5, 5") in der Spulenbaugruppe (13) im Wesentlichen vertikal zu einer Aufstandsebene (16) ausgerichtet sind, **dadurch gekennzeichnet, dass** der Induktivitätswert der ersten Teilspule (4, 4") insbesondere um zumindest 10 % größer dimensioniert ist als der Induktivitätswert der zweiten Teilspule (5, 5") und dass in einer Spulenbaugruppe (13) die zweite Teilspule (5, 5") baulich in einem Kernbereich (14) der ersten Teilspule (4, 4") angeordnet ist.

3. Vorrichtung (1) nach Anspruch 2, **dadurch gekennzeichnet, dass** die zweite Teilspule (5, 5") einer Spulenbaugruppe (13) so im Kernbereich (14) der ersten Teilspule (4, 4") angeordnet ist, dass die Ebenen einer oberen Stirnseite (26) und einer unteren Stirnseite (24) der zweiten Teilspule (5, 5") nicht außerhalb eines durch die Ebenen einer oberen Stirnseite (23) und einer unteren Stirnseite (25) der ersten Teilspule (4, 4") gebildeten Innenbereichs (33) der ersten Teilspule (4, 4") angeordnet sind.

4. Vorrichtung (1) nach Anspruch 2 oder 3, **dadurch gekennzeichnet, dass** in einer Spulenbaugruppe (13) eine mittlere Querschnittsebene (34) der ersten Teilspule (4, 4") und eine mittlere Querschnittsebene (35) der zweiten Teilspule (5, 5") in einer Ebene liegen.

5. Vorrichtung (1) nach einem der vorhergehenden Ansprüche, **dadurch gekennzeichnet, dass** im ersten Spulenstrang (3) die erste Teilspule (4) über ihren ersten elektrischen Anschluss (7) mit der ersten Phase (2) des Wechselstromsystems und die zweite Teilspule (5) über ihren ersten elektrischen Anschluss (8) mit der zweiten Phase (2') des Wechselstromsystems verbunden sind und im weiteren Spulenstrang (3") die erste Teilspule (4") über ihren ersten elektrischen Anschluss (7") mit der weiteren Phase (2") des Wechselstromsystems und die zweite Teilspule (5") über ihren ersten elektrischen Anschluss (8") mit der ersten Phase (2) des Wechselstromsystems verbunden sind, und dass die erste Teilspule (4) aus dem ersten Spulenstrang (3) und die zweite Teilspule (5") aus dem weiteren Spulenstrang (3") eine Spulenbaugruppe (13) bilden und die beiden ersten, mit der ersten Phase (2) des Wechselstromsystems verbundenen elektrischen Anschlüsse (7, 8") der ersten Teilspule (4) und der zweiten Teilspule (5") zusammengefasst sind und einen gemeinsamen elektrischen Phasenanschluss (19) der Spulenbaugruppe (13) bilden.

6. Vorrichtung (1) nach Anspruch 2 und 5, **dadurch gekennzeichnet, dass** in einer Spulenbaugruppe (13) die zweite Teilspule (5, 5") gegensinnig zur ersten Teilspule (4, 4") gewickelt ist.

7. Vorrichtung (1) nach Anspruch 5 oder 6, **dadurch gekennzeichnet, dass** wenigstens eine Haltevorrichtung (20) zur mechanischen Halterung und Stabilisierung der Teilspulen (4, 4", 5, 5") einer Spulenbaugruppe (13) ausgebildet ist und dass durch die wenigstens eine Haltevorrichtung (20) eine elektrischen Verbindung zwischen den Teilspulen (4, 4", 5, 5") hergestellt ist, sodass mit Hilfe der wenigstens einen Haltevorrichtung (20) der gemeinsame elektrische Phasenanschluss (19) der Spulenbaugruppe (13) gebildet ist.

8. Vorrichtung (1) nach Anspruch 1 und 7, **dadurch gekennzeichnet, dass** die wenigstens eine Haltevorrichtung (20) zwischen der ersten Teilspule (4, 4") und der zweiten Teilspule (5, 5") einer Spulenbaugruppe (13) angeordnet ist und mit einer oberen Stirnseite (23) der ersten Teilspule (4, 4") und mit einer unteren Stirnseite (24) der zweiten Teilspule (5, 5") in einem direkten elektrischen Kontakt steht, sodass der gemeinsame elektrische Phasenanschluss (19) der Spulenbaugruppe (13) gebildet ist, und dass vorzugsweise zumindest zwei weitere, elektrisch nicht miteinander verbundene Haltevorrichtungen (21, 22) an einer unteren Stirnseite (25) der ersten Teilspule (4, 4") und einer oberen Stirnseite (26) der zweiten Teilspule (5, 5") angeordnet sind, sodass jeweils ein zweiter elektrischer Anschluss (9, 9", 10, 10") zur Verbindung mit einer Thyristoreinheit (6, 6") gebildet ist.

9. Vorrichtung (1) nach Anspruch 2 und 7, **dadurch gekennzeichnet, dass** die wenigstens eine Haltevorrichtung (20) unter der ersten Teilspule (4, 4") und der zweiten Teilspule (5, 5") einer Spulenbaugruppe (13) angeordnet ist und mit unteren Stirnseiten (24, 25) der beiden Teilspulen (4, 4", 5, 5") in einem direkten elektrischen Kontakt steht, sodass der gemeinsame elektrische Phasenanschluss (19) der Spulenbaugruppe (13) gebildet ist, und dass vorzugsweise zumindest zwei weitere, elektrisch nicht miteinander verbundene Haltevorrichtungen (21, 22) an oberen Stirnseiten (23, 26) der beiden Teilspulen (4, 4", 5, 5") angeordnet sind, sodass jeweils ein zweiter elektrischer Anschluss (9, 9", 10, 10") zur Verbindung mit einer Thyristoreinheit (6, 6") gebildet ist.

10. Vorrichtung (1) nach Anspruch 9, **dadurch gekennzeichnet, dass** die zumindest eine Haltevorrichtung (20), welche den gemeinsamen elektrischen Phasenanschluss (19) bildet, auf mehreren elektrisch isolierenden Trägerelementen (27) ruht, sodass die Spulenbaugruppe (13) gegenüber der unteren Aufstandsebene (16) beabstandet angeordnet ist, und die elektrisch isolierenden Trägerelemente (27) entlang einer ersten Bahn vertikal unter der ersten Teilspule (4, 4") und entlang einer zweiten Bahn vertikal unter der zweiten Teilspule (5, 5"), insbesondere in regelmäßigen Abständen entlang der jeweiligen Bahn, angeordnet sind.

11. Vorrichtung (1) nach Anspruch 9 oder 10, **dadurch gekennzeichnet, dass** die zumindest eine Haltevorrichtung (20), welche den gemeinsamen elektrischen Phasenanschluss (19) bildet, einen äußeren Abschnitt (28) zur Halterung der ersten Teilspule (4, 4") und einen inneren Abschnitt (29) zur Halterung der zweiten Teilspule (5, 5") der Spulenbaugruppe (13) aufweist und dass der äußere Abschnitt (28) und der innere Abschnitt (29) der Haltevorrichtung (20) über ein oder mehrere Entkopplungselemente (30) miteinander verbunden sind.

12. Vorrichtung (1) nach einem der vorhergehenden Ansprüche, **dadurch gekennzeichnet, dass** das Wechselstromsystem drei Phasen (2, 2', 2") und die Vorrichtung (1) drei Spulenstränge (3, 3', 3") umfasst, und dass die erste Teilspule (4) des ersten Spulenstrangs (3) und die zweite Teilspule (5") eines dritten Spulenstrangs (3") mit der ersten Phase (2) verbunden sind und eine erste Spulenbaugruppe (13) bilden, und die erste Teilspule (4') eines zweiten Spulenstrangs (3') und die zweite Teilspule (5) des ersten Spulenstrangs (3) mit der zweiten Phase (2') verbunden sind und eine zweite Spulenbaugruppe (13') bilden, und die erste Teilspule (4") des dritten Spulenstrangs (3") und die zweite Teilspule (5') des zweiten Spulenstrangs (3') mit einer dritten Phase (2") verbunden sind und eine dritte Spulenbaugruppe (13") bilden.

13. Vorrichtung (1) nach einem der vorhergehenden Ansprüche, **dadurch gekennzeichnet, dass** die erste Teilspule (4, 4', 4") einer Spulenbaugruppe (13, 13', 13") mehrere hohlzylindrische und in Bezug auf die Längsmittelachse (15) der ersten Teilspule (4, 4', 4") konzentrisch angeordnete Wicklungslagen (17) umfasst, wobei die mehreren Wicklungslagen (17) elektrisch parallel geschaltet und magnetisch gekoppelt sind, und dass die zweite Teilspule (5, 5', 5") einer Spulenbaugruppe (13, 13', 13") eine einzige hohlzylindrische Wicklungslage (17) umfasst, wobei die zweite Teilspule (5, 5', 5") ebenso konzentrisch zur Längsmittelachse (15) der ersten Teilspule (4, 4', 4") angeordnet ist.

14. Vorrichtung (1) nach einem der vorhergehenden Ansprüche, **dadurch gekennzeichnet, dass** die Induktivität der zweiten Teilspule (5, 5', 5") 0,1 % bis 30 %, insbesondere 0,3 % bis 20 %, bevorzugt 0,5 % bis 10 % der Gesamtinduktivität der zweiten Teilspule (5, 5', 5") und der korrespondierenden ersten Teilspule (4, 4', 4") ausmacht.

15. Vorrichtung (1) nach einem der vorhergehenden Ansprüche, **dadurch gekennzeichnet, dass** der Induktivitätswert einer zweiten Teilspule (5, 5', 5") derart hoch gewählt ist, dass in einem Kurzschlussfall durch einen dabei auftretenden Kurzschlussstrom über die zweite Teilspule (5, 5', 5") und die daran angeschlossene Thyristoreinheit (6, 6', 6") der maximal zulässige Strombelastungswert dieser Thyristoreinheit (6, 6', 6") nicht überschritten wird, insbesondere der Kurzschlussstrom einen Wert von 25 kA nicht übersteigt.

## Claims

1. A device (1) for influencing reactive-power flows in multi-phase alternating current systems comprising a plurality of thyristor-controlled, or thyristor-switched, coil branches (3, 3"), wherein a first coil branch (3) is connected to a first phase (2) and a second phase (2') of the alternating current system, and another coil branch (3") is connected to the first phase (2) and another phase (2") of the alternating current system, and wherein each coil branch (3, 3") comprises a first partial coil (4, 4") and a second partial coil (5, 5"), which partial coils (4, 4", 5, 5") are connected via first electrical terminals (7, 7", 8, 8") respectively to the corresponding phase (2, 2', 2") of the alternating current system, and via second electrical terminals (9, 9", 10, 10") to a thyristor unit (6, 6") connected between the partial coils (4, 4", 5, 5"), and wherein a first partial coil (4, 4") and a second partial coil (5, 5") respectively form a structurally independent coil subassembly (13), and the longitudinal central axes (15) of the partial coils (4, 4", 5, 5") in the coil subassembly (13) are oriented essentially vertically with respect to a support plane (16), **characterised in that** the inductance factor of the first partial coil (4, 4") is specifically dimensioned so as to be at least 10 % greater than the inductance factor of the second partial coil (5, 5"), and **in that** the second partial coil (5, 5") in a coil subassembly (13) is arranged structurally above the first partial coil (4, 4"), and the second partial coil (5, 5") is supported by the first partial coil (4, 4").

2. A device (1) for influencing reactive-power flows in multi-phase alternating current systems comprising a plurality of thyristor-controlled, or thyristor-switched, coil branches (3, 3"), wherein a first coil branch (3) is connected to a first phase (2) and a second phase (2') of the alternating current system, and another coil branch (3") is connected to the first phase (2) and another phase (2") of the alternating current system, and wherein each coil branch (3, 3") comprises a first partial coil (4, 4") and a second partial coil (5, 5"), which partial coils (4, 4", 5, 5") are connected via first electrical terminals (7, 7", 8, 8") respectively to the corresponding phase (2, 2', 2") of the alternating current system, and via second electrical terminals (9, 9", 10, 10") to a thyristor unit (6, 6") connected between the partial coils (4, 4", 5, 5"), and wherein a first partial coil (4, 4") and a second partial coil (5, 5") respectively form a structurally independent coil subassembly (13), and the longitudinal central axes (15) of the partial coils (4, 4", 5, 5") in the coil subassembly (13) are oriented essentially vertically with respect to a support plane (16), **characterised in that** the inductance factor of the first partial coil (4, 4") is specifically dimensioned so as to be at least 10 % greater than the inductance factor of the second partial coil (5, 5") and **in that** the second partial coil (5, 5") in a coil subassembly (13) is arranged structurally in a core region (14) of the first partial coil (4, 4").

3. The device (1) according to claim 2, **characterised in that** the second partial coil (5, 5") of a coil subassembly (13) is arranged in the core region (14) of the first partial coil (4, 4") in such a way that the planes of a top end face (26) and a bottom end face (24) of the second partial coil (5, 5") are not arranged outside of an inner region (33) of the first partial coil (4, 4") formed by the planes of a top end face (23) and a bottom end face (25) of the first partial coil (4, 4").

4. The device (1) according to claim 2 or 3, **characterised in that** in a coil subassembly (13), a central cross-sectional plane (34) of the first partial coil (4, 4") and a central cross-sectional plane (35) of the second partial coil (5, 5") lie in one plane.

5. The device (1) according to one of the preceding claims, **characterised in that** the first partial coil (4) in the first coil branch (3) is connected via its first electrical terminal (7) to the first phase (2) of the alternating current system, and the second partial coil (5) is connected via its first electrical terminal (8) to the second phase (2') of the alternating current system and, in the other coil branch (3"), the first partial coil (4") is connected via its first electrical terminal (7") to the other phase (2") of the alternating current system, and the second partial coil (5") is connected via its first electrical terminal (8") to the first phase (2) of the alternating current system, and **in that** the first partial coil (4) from the first coil branch (3) and the second partial coil (5") from the other coil branch (3") constitute a coil subassembly (13) and the two first electrical terminals (7, 8") of the first partial coil (4) and second partial coil (5") connected to the first phase (2) of the alternating current system are grouped and constitute a joint electrical phase terminal (19) of the coil subassembly (13).

6. The device (1) according to claims 2 and 5, **characterised in that** in a coil subassembly (13), the second partial coil (5, 5") is wound in the direction opposite to that of the first partial coil (4, 4").

7. The device (1) according to claim 5 or 6, **characterised in that** at least one retaining device (20) is provided for mechanically retaining and stabilising the partial coils (4, 4", 5, 5") of a coil subassembly (13) and **in that** an electrical connection is established by the at least one retaining device (20) between the partial coils (4, 4", 5, 5") so that the joint electrical phase terminal (19) of the coil subassembly (13) is formed with the aid of the at least one retaining device (20).

8. The device (1) according to claims 1 and 7, **characterised in that** the at least one retaining device (20) is arranged between the first partial coil (4, 4") and the second partial coil (5, 5") of a coil subassembly (13) and sits in direct electrical contact with a top end face (23) of the first partial coil (4, 4") and with a bottom end face (24) of the second partial coil (5, 5"), thereby forming the joint electrical phase terminal (19) of the coil subassembly (13), and **in that** at least two other retaining devices (21, 22) which are not in electrical contact with one another are preferably provided at a bottom end face (25) of the first partial coil (4, 4") and a top end face (26) of the second partial coil (5, 5"), thereby respectively forming a second electrical terminal (9, 9", 10, 10") to provide a connection to a thyristor unit (6, 6").

9. The device (1) according to claims 2 and 7, **characterised in that** the at least one retaining device (20) is arranged underneath the first partial coil (4, 4") and the second partial coil (5, 5") of a coil subassembly (13) and sits in direct electrical contact with bottom end faces (24, 25) of the two partial coils (4, 4", 5, 5"), thereby forming the joint electrical phase terminal (19) of the coil subassembly (13), and **in that** at least two other retaining devices (21, 22), which are not electrically connected to one another, are preferably arranged at top end faces (23, 26) of the two partial coils (4, 4", 5, 5"), thereby respectively forming a second electrical terminal (9, 9", 10, 10") to provide a connection to a thyristor unit (6, 6").

10. The device (1) according to claim 9, **characterised in that** the at least one retaining device (20) constituting the joint electrical phase terminal (19) sits on a plurality of electrically isolating support elements (27) so that the coil subassembly (13) is arranged at a distance apart from the bottom support plane (16) and the electrically isolating support elements (27) are arranged along a first path vertically underneath the first partial coil (4, 4") and along a second path vertically underneath the second partial coil (5, 5"), in particular at regular distances along the respective path.

11. The device (1) according to claim 9 or 10, **characterised in that** the at least one retaining device (20) constituting the joint electrical phase terminal (19) has an outer portion (28) for retaining the first partial coil (4,4") and an inner portion (29) for retaining the second partial coil (5, 5") of the coil subassembly (13), and the outer portion (28) and the inner portion (29) of the retaining device (20) are connected to one another via one or more decoupling elements (30).

12. The device (1) according to one of the preceding claims, **characterised in that** the alternating current system comprises three phases (2, 2', 2") and the device (1) comprises three coil branches (3, 3', 3"), and the first partial coil (4) of the first coil branch (3) and the second partial coil (5") of a third coil branch (3 ") are connected to the first phase (2) and form a first coil subassembly (13), and the first partial coil (4') of a second coil branch (3') and the second partial coil (5) of the first coil branch (3) are connected to the second phase (2') and form a second coil subassembly (13'), and the first partial coil (4") of the third coil branch (3") and the second partial coil (5') of the second coil branch (3') are connected to a third phase (2") and form a third coil subassembly (13").

13. The device (1) according to one of the preceding claims, **characterised in that** the first partial coil (4, 4', 4") of a coil subassembly (13, 13', 13") comprises a plurality of hollow cylindrical winding layers (17) arranged concentrically with the longitudinal central axis (15) of the first partial coil (4, 4', 4"), wherein the plurality of winding layers (17) is electrically connected in parallel and magnetically coupled, and **in that** the second partial coil (5, 5', 5") of a coil subassembly (13, 13', 13") comprises a single hollow cylindrical winding layer (17), wherein the second partial coil (5, 5', 5") is likewise arranged concentrically with the longitudinal central axis (15) of the first partial coil (4, 4', 4").

14. The device (1) according to one of the preceding claims, **characterised in that** the inductance of the second partial coil (5, 5', 5") amounts to 0.1 % to 30 %, in particular 0.3 % to 20 %, preferably 0.5 % to 10 %, of the total inductance of the second partial coil (5, 5', 5") and the corresponding first partial coil (4, 4', 4").

15. The device (1) according to one of the preceding claims, **characterised in that** the level of the inductance factor of a second partial coil (5, 5', 5") is selected so that, in the event of a short circuit, the maximum permissible value of a current loading for the thyristor unit (6, 6', 6") is not exceeded by a short circuit current occurring as a result across the second partial coil (5, 5', 5") and the thyristor unit (6, 6', 6") connected to it, in particular the short circuit current does not exceed a value of 25 kA.

## Revendications

1. Dispositif (1) servant à influer sur les flux de puissance réactive dans des systèmes de courant alternatif polyphasé ayant plusieurs lignes de bobines (3, 3") commandées ou commutées par thyristor, une première ligne de bobines (3) étant raccordée à une première phase (2) et une deuxième phase (2') du système de courant alternatif et une autre ligne de bobines (3") étant raccordée à la première Phase (2) et une autre phase (2") du système de courant alternatif, et chaque ligne de bobines (3, 3") comprenant une première bobine partielle (4, 4") et une seconde bobine partielle (5, 5"), lesquelles bobines partielles (4, 4", 5, 5") étant raccordées à la phase respective (2, 2', 2") par des premiers raccords électriques (7, 7", 8, 8") et à une unité de thyristors (6, 6") branchée entre les bobines partielles (4, 4", 5, 5") par des deuxièmes raccords électriques (9, 9", 10, 10"), et une première bobine partielle (4, 4") et une seconde bobine partielle (5, 5") formant chacune, sur le plan de la construction, un ensemble individuel de bobines (13) et les axes centraux longitudinaux (15) des bobines partielles (4, 4", 5, 5") étant orientés dans l'ensemble de bobines (13) sensiblement perpendiculairement à un plan de pose (16), **caractérisé en ce que** la valeur d'inductance de la première bobine partielle (4, 4") est notamment au moins 10 % plus grand que la valeur d'inductance de la seconde bobine partielle (5, 5") et **en ce que**, dans un ensemble de bobines (13), la seconde bobine partielle (5, 5") est disposée, sur le plan de la construction, au-dessus de la première bobine partielle (4, 4") et **en ce que** la seconde bobine partielle (5, 5") est portée par la première bobine partielle (4, 4").

2. Dispositif (1) servant à influer sur les flux de puissance réactive dans des systèmes de courant alternatif polyphasé ayant plusieurs lignes de bobines (3, 3") commandées ou commutées par thyristor, une première ligne de bobines (3) étant raccordée à une première phase (2) et une deuxième phase (2') du système de courant alternatif et une autre ligne de bobines (3") étant raccordée à la première Phase (2) et une autre phase (2") du système de courant alternatif, et chaque ligne de bobines (3, 3") comprenant une première bobine partielle (4, 4") et une seconde bobine partielle (5, 5"), lesquelles bobines partielles (4, 4", 5, 5") étant raccordées à la phase respective (2, 2', 2") par des premiers raccords électriques (7, 7", 8, 8") et à une unité de thyristors (6, 6") branchée entre les bobines partielles (4, 4", 5, 5") par des deuxièmes raccords électriques (9, 9", 10, 10"), et une première bobine partielle (4, 4") et une seconde bobine partielle (5, 5") formant chacune, sur le plan de la construction, un ensemble individuel de bobines (13) et les axes centraux longitudinaux (15) des bobines partielles (4, 4", 5, 5") étant orientés dans l'ensemble de bobines (13) sensiblement perpendiculairement à un plan de pose (16), **caractérisé en ce que** la valeur d'inductance de la première bobine partielle (4, 4") est notamment au moins 10 % plus grand que la valeur d'inductance de la seconde bobine partielle (5, 5") et **en ce que**, dans un ensemble de bobines (13), la seconde bobine partielle (5, 5") est disposée, sur le plan de la construction, dans une zone centrale (14) de la première bobine partielle (4, 4").

3. Dispositif (1) selon la revendication 2, **caractérisé en ce que** la seconde bobine partielle (5, 5") d'un ensemble de bobines (13) est disposée dans la zone centrale (14) de la première bobine partielle (4, 4") de façon telle que les plans d'une face frontale supérieure (26) et d'une face frontale inférieure (24) de la seconde bobine partielle (5, 5") ne soient pas disposés en dehors d'une zone intérieure (33) de la première bobine partielle (4, 4") formée par les plans d'une face frontale supérieure (23) et d'une face frontale inférieure (25) de la première bobine partielle (4, 4").

4. Dispositif (1) selon la revendication 2 ou 3, **caractérisé en ce que**, dans un ensemble de bobines (13), un plan médian transversal (34) de la première bobine partielle (4, 4") et un plan médian transversal de la seconde bobine partielle (5, 5") sont situé dans un même plan.

5. Dispositif (1) selon l'une quelconque des revendications précédentes, **caractérisé en ce que**, dans la première ligne de bobines (3), la première bobine partielle (4) est raccordée par son premier raccord électrique (7) à la première phase (2) du système de courant alternatif et la seconde bobine partielle (5) est raccordée par son premier raccord électrique (8) à la deuxième phase (2') du système de courant alternatif, et que, dans l'autre ligne de bobines (3"), la première bobine partielle (4") est raccordée par son premier raccord électrique (7") à l'autre phase (2") du système de courant alternatif et la seconde bobine partielle (5") est raccordée par son premier raccord électrique (8") à la première phase (2) du système de courant alternatif, et **en ce que** la première bobine partielle (4) de la première ligne de bobines (3) et la seconde bobine partielle (5") de l'autre ligne de bobines (3") forment un assemblage de bobines (13) et que les deux premiers raccords électriques (7, 8") de la première bobine partielle (4) et de la seconde bobine partielle (5") reliés à la première phase (2) du système de courant alternatif sont réunis et forment un raccord de phase électrique commun (19) du assemblage de bobines (13).

6. Dispositif (1) selon la revendication 2 et 5, **caractérisé en ce que**, dans un assemblage de bobines (13), la seconde bobine partielle (5, 5") est enroulée en sens opposé par rapport à la première bobine partielle (4, 4").

7. Dispositif (1) selon la revendication 5 ou 6, **caractérisé en ce qu'**au moins un dispositif de maintien (20) est formé pour maintenir et stabiliser les bobines partielles (4, 4", 5, 5") d'un assemblage de bobines (13) et **en ce que**, par cet au moins un dispositif de maintien (20), une liaison électrique est établie entre les bobines partielles (4, 4", 5, 5") si bien que, par cet au moins un dispositif de maintien (20), le raccord de phase électrique commun (19) du assemblage de bobines (13) est formé.

8. Dispositif (1) selon la revendication 1 et 7, **caractérisé en ce que** l'au moins un dispositif de maintien (20) est disposé entre la première bobine partielle (4 4") et la seconde bobine partielle (5, 5") d'un assemblage de bobines (13) et est en contact électrique direct avec une face frontale supérieure (23) de la première bobine partielle (4, 4") et avec une face frontale inférieure (24) de la seconde bobine partielle (5, 5") si bien que le raccord de phase électrique commun (19) de l'assemblage de bobines (13) est formé et que, de préférence, au moins deux autres dispositifs de maintien (21, 22) électriquement non reliés l'un à l'autre, sont disposés sur une face frontale inférieure (25) de la première bobine partielle (4, 4") et une face frontale supérieure (26) de la seconde bobine partielle (5, 5") si bien qu'un second raccord électrique respectif (9, 9", 10, 10") est formé pour le raccord à une unité de thyristor (6, 6").

9. Dispositif (1) selon la revendication 2 et 7, **caractérisé en ce que** l'au moins un dispositif de maintien (20) est disposé en-dessous de la première bobine partielle (4, 4") et de la seconde bobine partielle (5, 5") d'un assemblage de bobines (13) et est en contact électrique direct avec les faces frontales inférieures (24, 25) des deux bobines partielles (4, 4", 5, 5") si bien que le raccord de phase électrique commun (19) de l'assemblage de bobines (13) est formé et que, de préférence, au moins deux autres dispositifs de maintien (21, 22) électriquement non reliés l'un à l'autre, sont disposés sur des faces frontales supérieures (23, 26) des deux bobines partielles (4, 4", 5, 5") si bien qu'un second raccord électrique respectif (9, 9", 10, 10") est formé pour le raccord à une unité de thyristor (6, 6").

10. Dispositif (1) selon la revendication 9, **caractérisé en ce que** l'au moins un dispositif de maintien (20) qui forme le raccord de phase électrique commun (19), repose sur plusieurs élément de support (27) électriquement isolants si bien que l'assemblage de bobines (13) est disposé espacé par rapport au plan de pose inférieur (16) et que les éléments de support (27) électriquement isolants sont disposés le long d'une première ligne verticalement en-dessous de la première bobine partielle (4 4") et le long d'une seconde ligne verticalement en-dessous de la seconde bobine partielle (5, 5"), et cela notamment à des distances régulières le long de la ligne respective.

11. Dispositif (1) selon la revendication 9 ou 10, **caractérisé en ce que** l'au moins un dispositif de maintien (20) qui forme le raccord de phase électrique commun (19), comprend une partie extérieure (28) pour le maintien de la première bobine partielle (4, 4") et une partie intérieure (29) pour le maintien de la seconde bobine partielle (5, 5") de l'assemblage de bobines (13) et **en ce que** la partie extérieure (28) et la partie intérieure (29) du dispositif de maintien (20) sont reliées l'une à l'autre par un ou plusieurs élément s de découplage (30).

12. Dispositif (1) selon l'une quelconque des revendications précédentes, **caractérisé en ce que** le système de courant alternatif comprend trois phases (2, 2', 2") et le dispositif (1) comprend trois lignes de bobines (3, 3', 3") et **en ce que** la première bobine partielle (4) de la première ligne de bobines (3) et la seconde bobine partielle (5") d'une troisième ligne de bobines (3") sont reliées à la première phase (2) et forment un premier assemblage de bobines (13), que la première bobine partielle (4') d'une deuxième ligne de bobines (3') et la seconde bobine partielle (5) de la première ligne de bobines (3) sont reliées à la deuxième phase (2') et forment un deuxième assemblage de bobines (13') et que la première bobine partielle (4") de la troisième ligne de bobines (3") et la seconde bobine partielle (5') de la deuxième ligne de bobines (3') sont reliées à une troisième phase (2") et forment un troisième assemblage de bobines (13").

13. Dispositif (1) selon l'une quelconque des revendications précédentes, **caractérisé en ce que** la première bobine partielle (4, 4', 4") d'un assemblage de bobines (13, 13', 13") comprend plusieurs enroulements (17) en forme d'un cylindre creux et disposés de manière concentrique par rapport à l'axe central longitudinal (15) de la première bobine partielle (4, 4', 4"), les plusieurs enroulements (17) étant branchés électriquement en parallèle et magnétiquement accouplés, et **en ce que** la seconde bobine partielle (5, 5', 5") d'un assemblage de bobines (13, 13', 13") comprend un seul enroulement (17) en forme d'un cylindre creux, la seconde bobine partielle (5, 5', 5") étant également disposée de manière concentrique par rapport à l'axe central longitudinal (15) de la première bobine partielle (4, 4', 4").

14. Dispositif (1) selon l'une quelconque des revendications précédentes, **caractérisé en ce que** l'inductance de la seconde bobine partielle (5, 5', 5") représente 0,1 % à 30 %, notamment 0,3 % à 20 %, de préférence 0,5 % à 10 % de l'inductance totale de la seconde bobine partielle (5, 5', 5") et de la première bobine partielle correspondante (4, 4', 4").

15. Dispositif (1) selon l'une quelconque des revendications précédentes, **caractérisé en ce que** l'inductance d'une seconde bobine partielle (5, 5', 5") est choisie si élevée que, en cas de court-circuit, par un courant de court-circuit qui en résulte et qui passe par la seconde bobine partielle (5, 5', 5") et l'unité de thyristor (6, 6', 6") reliée à cette dernière, la charge maximale autorisée en courant de cette unité de thyristor (6, 6', 6") n'est pas dépassée et que le courant de court-circuit ne dépasse notamment pas une valeur de 25 kA.
